(19) Europäisches Patentamt
European Patent Office
Office européen des brevets

(11) **EP 0 967 462 A1**

(12) **EUROPEAN PATENT APPLICATION**

(43) Date of publication:
**29.12.1999 Bulletin 1999/52**

(51) Int. Cl.$^6$: **G01D 3/08**, G01D 18/00

(21) Application number: **99112073.4**

(22) Date of filing: **23.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.06.1998 IT MO980143**

(71) Applicant: **B. BRAUN MELSUNGEN AG
34212 Melsungen (DE)**

(72) Inventor: **Ferri, Angelo
41037 Mirandola (IT)**

(74) Representative:
**Selting, Günther, Dipl.-Ing. et al
Patentanwälte
von Kreisler, Selting, Werner
Postfach 10 22 41
50462 Köln (DE)**

(54) **Bridge sensor and verification method**

(57)     The improved device for precise measurement of magnitudes, is made of a closed network circuitry (2), a branch of which is made of at least one Wheatstone bridge (1) connected in series with a power source (3) and linked in parallel by a resistive branch (4) made of at least two resistors (R7,R8) linked in series, among which a first point of linkage (5) to the instrument is defined by a bipolar instrument measuring the potential. Second and third alternated linkage points (6,7) of the said instrument are located on the branches of the said bridge (4) and the method of verification of the correct functioning of the improved device for precise measurement of magnitudes consists in measuring the potential differences between the said first and second points (5,6) and between the said first and third points (5,7) and, in correlating mathematically between them, the said potential differences measured and, from the said mathematical correlation, in verifying that a presettable expected value is obtained.

FIG. 1

**Description**

The present invention relates to an improved device for precision measurement of magnitudes and a method to verify the correct functioning of the device.

Devices for accurate measurements of magnitudes, such as measurements of pressure and force, have been available on the market for some time.

Such devices are better known as transducers and are essentially composed of electrical circuitry, configured as a Wheatstone bridge, in which the circuit resistors, usually known as extensometers, are fixed, usually glued, to a laminar base, usually made of steel, which is deformable, according to an elastic constant.

Because of this characteristic, every time a deformation of the base occurs, due to load stress, a proportional variation of the absolute value of one or more resistors and the measurement of such differential value, caused by the modification, when correctly interpolated, gives the measurement of the value required.

However, such known transducers are subjected to faults and malfunctioning which affect their precision, hence their reliability.

Faults in the manufacturing process or accidental collisions or knocking of the devices can cause a progressive detachment of one of the resistors, or the partial detachment of the base, which in turn will cause the modification of its absolute value, with subsequent wrong reading of the value.

However, if it is of a macroscopic order, the wrong reading can be immediately detected because in activating the transducer in discharge configuration, it must display the reference value set by the manufacturer. This value, starting from the 'zero' origin value, takes into account the sensitivity set by the manufacturer of all the elements of which the transducer is made and, as stated above, if the difference between the expected value and the value effectively found is excessive, it means that the transducer is damaged beyond repair and must be replaced.

On the other hand, if the said reference value is verified before the installation of the transducer, this does not necessarily mean that the same is intact and reliable.

The anomaly can appear after the installation of the transducer, and therefore it cannot be detected.

In this latter case it can be quite dangerous in those circumstances in which the transducer is used in a medical environment. In these instances, the transducer is an integral part of those machines which automatically control volumes of liquid medicinals to be infused in a patient.

More precisely, for therapies such as dialysis these transducers are used to weigh the bags containing the medicinal solutions to be progressively infused to the patient in a predetermined period of time with a predetermined and precise volume of these solutions, vis a vis of a similarly programmed subtraction of fluids drained from the patient.

A malfunctioning of the transducer occurring during the treatment, will put the patient in severe danger, because the administration or the subtraction of solution will have different values which will be different from those programmed , with a substantially exponential trend and, even worse, these values will be detectable only at the end of the treatment, after the patient has already suffered physical damage.

In attempting to eliminate such problems and to avoid the risk related to them at present there are procedures to verify the correct functionality of the electronics which elaborate the transducer signals by modifying, at programmed intervals, the transducers signals output. However, this verification does not provide information on the state of structural wear and tear of the transducer internal circuitry.

A transducer malfunction would be interpreted as an incorrect application of the therapeutic treatment, and it would be corrected automatically, paradoxically worsening the patient's condition.

The second method of verification of correct functioning of the device consists in coupling two transducers, which control each other, and intervene in case of malfunctioning of one of the two, to interrupt the treatment or to reset it to preset values.

This, however, implies the availability of supplying machines with two transducers, with the inconvenience that the cost of the extra device will heavily affect the overall cost of the machines, limiting their diffusion and the capacity of the therapeutic treatments.

Furthermore, the methodology used for coupling the two transducers, due to the instability of the anchorage between them, causes further and greater errors.

The technical purpose of this invention is to solve the problems of the known technology described earlier, by providing an improved device for the precision measurement of values, which allows, even with the installation of a single device, self-diagnosis of correct functioning during the whole time in which the device is utilised.

These and other objectives are achieved with an improved device for precise measurement of magnitudes which is characterised by closed network circuitry, a branch of which is constituted by at least a Wheatstone bridge serially connected with a power source, and connected in parallel with a resistive branch, of at least two resistors linked in series, among which is defined the first linkage point for a bipolar instrument of measurement of potential, and also of a second and third point of alternate link of the said instrument, located on the branches of the bridge.

The method of verification of correct functioning of the improved device for the precise measurement of values has the advantageous feature of measuring potential differences between the first and the second point and between the said first and third point, and of being capable of correlating mathematically between them these differences of measured potentials, and in verifying that this mathematical correlation results in an expected pre-settable reference value.

Further characteristics and advantages will became more apparent from the description of a preferred form of installation of an improved device for the precise measurement of magnitudes, which is here illustrated as an example. By no means is its usage confined to the drawings illustrating the example.

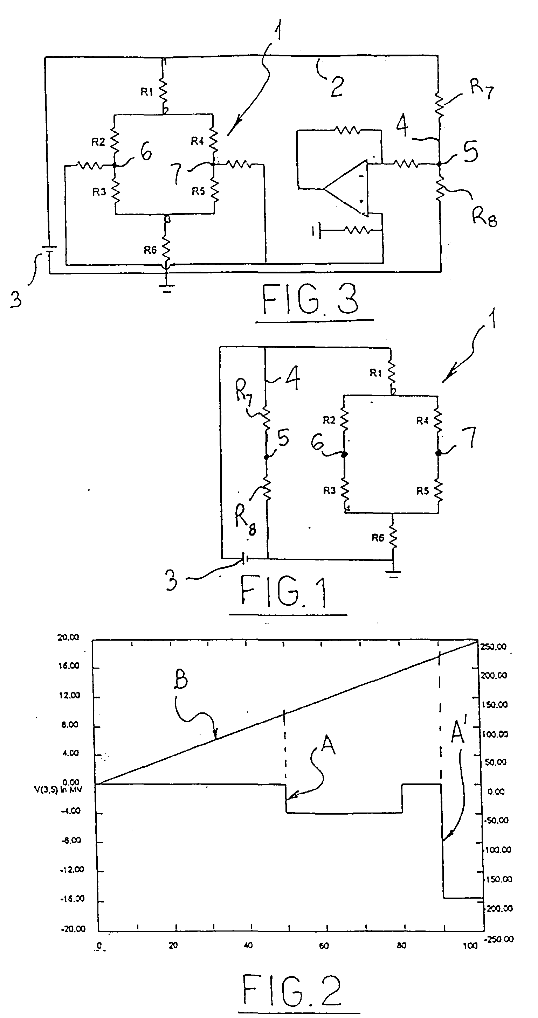

Fig 1 shows the preferred scheme circuit for the making of the improved device for the precise measurement of values;

Fig. 2 shows the Cartesian diagram having for co-ordinates the intensity in millivolts of the potential difference detectable with appropriate bipolar instrument which is realized by the device according to the invention, and to the percentage of load applied to the transducer and to the characteristic offset curve of the device, according to the invention , which was caused by damage to the transducer and produced the subsequent typical response curve;

Fig. 3 shows another circuit diagram, according to the invention, coupled to a signal amplification instrument.

With special reference to the Figures described above, in the assembly reference numeral 1 indicates an improved device for the precise measurement of values, which essentially comprises a closed network circuitry 2.

A branch of this circuitry is constituted by a Wheatstone bridge in which are inserted resistors of known values: R1, R2, R3, R4, R5, R6 , and is connected in series by a power source 3.

Parallel to the above-mentioned Weatstone, which is the equivalent to a transducer circuit, is linked the resistive branch 4, made at least of two resistors R7 and R8 which are linked in series between them and are of identical values. Between these two resistors, is defined the first point 5, to be linked to a bipolar instrument which is used for the measurement of potential. To keep the diagram as clear as possible, the latter is not illustrated.

A second and a third linkage point, alternated for the said instrument and indicated respectively by reference numerals 6 and 7, are provided on the branches which constitute the Wheatstone bridge which, in turn, constitutes the transducer.

The realisation of the method, according to the invention, with the usage of the related device 1 is as follows:

First the device has to be connected to a conventional instrument for the measurement of the electric potential, the first connection has to be made between points 5 and 6, and subsequently between points 5 and 7, to detect the difference in potential.

The values so detected have to be correlated between them according to the formula

$$(V_6 - V_5) + (V_7 - V_5) = V_s ,$$

where $V_s$ has to be equal to zero or to be comprised between a range of values defined by preset minimum and maximum values.

If this condition is verified during all the time in which the transducer is in use, the machine utilising for its functioning this device will continue to work without any interruption. In case of damage or fault of the transducer, for instance either a total or partial detachment of one of the resistors, from $R_2$ to $R_5$, this damage will change the correct absolute value throwing off balance the circuit constituting the transducer (Wheatstone bridge). The device 1 which continuously monitors the said expected value $V_s$, will detect this unbalance, even if its absolute value is very low , of the order of a few thousandth of the nominal precision of the transducer; to this effect, one should note the sudden rise in curve A, which is reproduced as an example, by creating a malfunction in only one of the transducers's resistance, from R2 to R5, of a magnitude equal to 1% of the maximal basic variation of the related scale.

This malfunctioning will produce an error of 0.25% in the nominal precision in the basic value of the transducer scale.

The following sudden rise in the curve A' is an example of the magnitude of the fault which, in this case is equal to 4% of the maximum variation of the bottom value of the scale of one of the aforesaid resistors. This, in turn, will cause a 1% precision error in the transducer.

The characteristic curve B representing the normal detection curve of the transducer response used according to prior art is not capable of detecting significant response values which are close to the two values of the anomalies mentioned above. Therefore, if this is used as a reference curve, the machine utilising the said transducer will be functioning with a 'hidden' error, and if this machine were to be used in a medical/therapeutical environment, it would be dangerous for the patients, especially if the treatments administered were to be continued for several days.

If the absolute value of the curve A (algebraically positive or negative) exceeds the threshold of a $V_s$ value, which is preset according to the operating precision required to the machine, the device 1 will send an alarm signal, in any form of a usual alerting means and, because the functioning of the machine is subjugated to the device, this will stop the machine.

If, on the contrary, the said value of curve A is within the range of the accepted $V_s$ values which can duly be preset in advance, the device will not alter the machine running.

In this way, it has been possible to demonstrate how the described device produces the predetermined results.

The invention so conceived is susceptible of modifications and variations, all within the concept underlying the invention.

Furthermore, all details are replaceable with other components or elements technically equivalent.

In the practical application or implementation of the invention, the materials used for its construction and the forms and dimensions can be varied, without loss of protection of the following patent claims.

## Claims

1.  Improved device for the precision measurement of magnitudes comprising

    -   a closed network circuitry (2), a branch of which is made of at least one Wheatstone bridge (1) serially connected with a power source (3) and parallel to it, and further connected to a resistive branch (4), made of at least two resistors (R7,R8) connected in series, between which a first point (5) of connection for a bipolar instrument of measurement of potential is defined,

    -   a second and a third connecting point (6,7) of alternate connection of the said instrument being present on the branches constituting the said bridge (4).

2.  Method of verification of correct functioning of the improved device for the precision measurement of values according to claim 1, characterised by the fact that the device measures the potential difference between the said first and second point (5,6) and first and third point (5,7), in correlating mathematically between the said potential differences measured and, from the said mathematical correlation, verifying that the expected presettable reference value is obtained.

3.  Device according to claims 1 and 2, characterised by the fact that the absolute value of the resistors can be preset.

4.  Device according to claim 3, characterised by the fact that the said absolute value is substantially equalisable to the relevant components by the said resistors (R7,R8).

5.  Device according to claim 4, characterised by the fact that the said equalising components are constituted by a rheostat.

6.  Device according to claims 1 and 3, characterised by the fact that it can be coupled with an amplifier/signal comparator.

7.  Method according to claim 2, characterised by the fact that the said mathematical correlation is made by the summation of the measured potential differences measured between the said second and first point (6,5) and, respectively, said third and first point (7,5).

8.  Method according to claims 2 or 7, characterised by the fact that the expected pre-settable reference value is zero.

9.  Method according to claims 2, 7 or 8, characterised by the fact that the expected pre-settable reference value is comprised within presettable minimum and maximum values.

FIG.3

FIG.1

FIG.2

**European Patent Office**

## EUROPEAN SEARCH REPORT

Application Number

EP 99 11 2073

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 120 195 A (LEEMING HAROLD) 17 October 1978 (1978-10-17) * column 2, line 24 - line 44; figure * | 1-9 | G01D3/08 G01D18/00 |
| X | EP 0 592 205 A (NIPPON ELECTRIC CO) 13 April 1994 (1994-04-13) * page 3, line 23 - line 49; figure 3 * | 1-9 | |
| A | US 5 612 488 A (YAMAMOTO MASAHIRO ET AL) 18 March 1997 (1997-03-18) * abstract; figure 1 * | 1,2,6,7 | |

TECHNICAL FIELDS SEARCHED (Int.Cl.6)

G01D

The present search report has been drawn up for all claims

| Place of search | Date of completion of the search | Examiner |
|---|---|---|
| THE HAGUE | 30 September 1999 | Lloyd, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 99 11 2073

This annex lists the patent family members relating to the patent documents cited in the above—mentioned European search report.
The members are as contained in the European Patent Office EDP file on
The European Patent Office is in no way liable for these particulars which are merely given for the purpose of information.

30-09-1999

| Patent document cited in search report | | Publication date | Patent family member(s) | | Publication date |
|---|---|---|---|---|---|
| US 4120195 | A | 17-10-1978 | NONE | | |
| EP 0592205 | A | 13-04-1994 | DE | 69316136 D | 12-02-1998 |
| | | | DE | 69316136 T | 14-05-1998 |
| | | | JP | 2082325 C | 23-08-1996 |
| | | | JP | 6229778 A | 19-08-1994 |
| | | | JP | 8001390 B | 10-01-1996 |
| | | | US | 5440234 A | 08-08-1995 |
| US 5612488 | A | 18-03-1997 | JP | 8178951 A | 12-07-1996 |
| | | | DE | 19532764 A | 27-06-1996 |

EPO FORM P0459

For more details about this annex : see Official Journal of the European Patent Office, No. 12/82